# EUROPEAN PATENT APPLICATION

(11) **EP 4 700 850 A1**
(43) Date of publication of application: **25.02.2026**
(21) Application number: 24908379.1
(22) Date of filing: 19.12.2024
(51) Int. Cl.: H01M 4/134, H01M 4/48, H01M 4/587, H01M 4/38, H01M 4/62, H01M 10/052, H01M 4/02

(54) **ANODE AND LITHIUM SECONDARY BATTERY COMPRISING SAME**

(30) Priority: 22.12.2023 KR 20230189137
(71) Applicant: LG Energy Solution, Ltd., Seoul 07335 (KR)
(72) Inventor: LEE, Jaewook, Daejeon 34122 (KR); KO, Minjin, Daejeon 34122 (KR); KWON, Yohan, Daejeon 34122 (KR); MIN, Jiwon, Daejeon 34122 (KR)
(74) Representative: Hoffmann Eitle
(86) International application number: PCT/KR2024/097185
(87) International publication number: WO 2025/136075

(57) **Abstract**

The present application relates to an anode comprising an anode active material layer that includes a silicon-based active material, wherein, when the cohesion strength is measured at respective positions of 25%, 50% and 75% of the total thickness from a first surface of the anode active material layer on the basis of the total thickness T, which is the distance between the first surface and a second surface that face each other, the average of the measured cohesion strengths is 1 Mpa to 20 Mpa, the deviation of the measured cohesion strengths is 140% or less, and the vertical resistance is 0.005 Ω to 0.3 Ω.

## Description

### TECHNICAL FIELD

This application is based on and claims priority from Korean Patent Application No. 10-2023-0189137 filed on December 22, 2023, with the Korean Intellectual Property Office, the disclosure of which is incorporated herein in its entirety by reference.

The present disclosure relates to a negative electrode and a lithium secondary battery including the same.

### BACKGROUND

Due to the rapid increase in the use of fossil fuels, the demand for alternative energy and clean energy has risen. As part of this trend, research in the field of power generation and energy storage using electrochemical reactions has been actively pursued.

Currently, secondary batteries are a representative example of electrochemical elements that utilize such electrochemical energy, and the range of applications of the secondary batteries is increasing.

With the growing technical developments and demand for devices utilizing batteries such as small- and medium-sized mobile devices such as mobile phones and laptop computers, as well as medium- and large-scale devices such electric vehicles and energy storage devices, the demand for secondary batteries as an energy source is increasing significantly. Among these secondary batteries, lithium secondary batteries, which have a relatively high energy density and voltage, long cycle life, and low self-discharge rate, have been commercialized and are widely used. Accordingly, research and development efforts to enhance the performance of lithium secondary batteries are actively underway.

### SUMMARY

### Technical problem to be solved

Silicon-based compounds, which are high-capacity negative electrode active materials, offer the advantage of a higher capacity compared to conventional graphite. However, during the preparation and storage of electrode compositions or slurries containing silicon-based compounds, surface oxidation reactions may generate a hydrogen gas, leading to the risk of explosion and deterioration of phase stability.

### Technical Means

The present disclosure provides a negative electrode with an adjusted electrode cohesion strength and vertical resistance, and a lithium secondary battery including the same.

An embodiment of the present disclosure provides a negative electrode including a negative electrode active material layer that contains a silicon-based active material, wherein based on a total thickness defined as a distance between opposing first and second surfaces of the negative electrode active material layer, when a cohesion strength is measured respectively at positions corresponding to 25%, 50%, and 75% of the total thickness from the first surface, an average of the measured cohesion strengths ranges from approximately 1 MPa to 20 MPa, a deviation of the measured cohesion strengths is equal to or less than approximately 140%, and a vertical resistance ranges from approximately 0.005 Ω to 0.3 Ω.

One embodiment herein provides a lithium secondary battery including the negative electrode, a positive electrode, and a separator.

One embodiment herein provides a battery module including the aforementioned lithium secondary battery as a unit cell.

One embodiment herein provides a battery pack including the aforementioned lithium secondary battery.

One embodiment herein provides a battery pack including the aforementioned battery module.

One embodiment herein provides an electric vehicle including the aforementioned battery pack.

One embodiment herein provides a method for manufacturing the aforementioned negative electrode.

### Technical Effect

While internal network connectivity of electrodes may be impaired due to the contraction or expansion of an electrode during the charge and discharge of a secondary battery, resulting in capacity degradation, a negative electrode with an electrode structure according to one embodiment of the present disclosure and a lithium secondary battery including the same may have a uniform cohesion strength in the thickness direction, thereby minimizing capacity degradation and enabling the production of a secondary battery with a relatively high capacity and excellent lifespan performance.

Further, the electrode of the lithium secondary battery according to one embodiment of the present disclosure may have a relatively low vertical resistance of approximately 0.005 Ω to 0.3 Ω, thereby minimizing electrode deterioration during charge and discharge and enabling the production of the secondary battery with excellent lifespan performance.

When the lithium secondary battery according to one embodiment of the present disclosure is used in electric vehicles, it may advance electric vehicle driving technologies, thus reducing greenhouse gas emissions and alleviating the impact of climate change.

### BRIEF DESCRIPTION OF THE DRAWINGS

The following drawings attached hereto illustrate embodiments of the present disclosure and serve to help further understanding of the technical idea of the present disclosure together with the detailed description of the disclosure to be described later. Therefore, the present disclosure should not be construed as being limited to the matters illustrated in the drawings.
FIG. 1 illustrates the structure of a negative electrode according to one embodiment of the present disclosure.
FIG. 2 is a flowchart illustrating a process of preparing a negative electrode according to one embodiment of the present disclosure.

Description of reference numbers:
- 10: negative electrode
- 100: negative electrode active material layer
- 200: current collector

In some of the attached drawings, corresponding components are given the same reference numerals. Those skilled in the art would appreciate that the drawings depict elements simply and clearly, and have not necessarily been drawn to scale. For example, in order to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

### DETAILED DESCRIPTION

As used herein, when a certain part "includes" a certain component, it means that the inclusion does not exclude other components unless explicitly stated otherwise, and that additional components may also be included.

As used herein, when one member is located "on" another member, it encompasses not only cases where the one member is in contact with the other member, but also cases where another member exists between the two members.

As used herein, "p to q" refers to a range "p or more and q or less" including both p and q.

The terms or words as used herein should not be interpreted as being limited to their usual or dictionary meanings, but should be interpreted as having meanings and concepts that are consistent with the technical idea of the present disclosure, based on the principle that the inventors may appropriately define the concepts of the terms to describe the disclosure.

As used herein, the singular expression of a term includes the plural expression unless the context clearly indicates otherwise.

As used herein, the terms "about," "approximately," and "substantially" are used to indicate ranges or meanings close to the specified values or degrees, taking into account the inherent preparation and material tolerances.

As used herein, the term "average particle diameter D₅₀" may refer to the particle diameter corresponding to 50% of the cumulative volume in a particle size distribution curve (particle size distribution graph curve). The average particle diameter may be measured, for example, using a laser diffraction method. The laser diffraction method generally enables the measurement of particle diameters from the submicron range up to several millimeters, providing high reproducibility and high resolution in the results. The measurement of the average particle diameter may be conducted using Microtrac equipment (manufacturer: Microtrac, Model Name: S3500) with water and triton-X100 as a dispersant. For example, the average particle diameter of a positive electrode active material may be measured within a refractive index range of 1.5 to 1.7, while a negative electrode active material may be measured under a condition with a refractive index of 1.97 or 2.42. For example, particles may be dispersed in a dispersion medium, introduced into a commercially available laser diffraction particle size measuring device, and irradiated with ultrasonic waves at approximately 28 kHz and 60 W output. After obtaining a cumulative volume particle size distribution graph, the particle size corresponding to 50% of the cumulative volume may be determined.

A secondary battery is constituted with a positive electrode, a negative electrode, an electrolyte, and a separator. The negative electrode includes a negative electrode active material that inserts and extracts lithium ions discharged from the positive electrode, and the negative electrode active material may include silicon-based particles with a relatively large discharge capacity.

Recently, in response to the demand for high-energy-density batteries, research have explored the combined use of silicon-based compounds such as Si/C and SiOₓ, which have a capacity 10 times or more greater than that of graphite-based materials as the negative electrode active material. Among these, Si/C-based active materials exhibit a superior initial capacity and energy efficiency compared to SiO, leading to the development of cells using electrodes containing these materials.

The present disclosure provides a method of preparing, as an electrode for a high-capacity lithium secondary battery, a high-density electrode with an enhanced energy density per unit volume, by adjusting physical properties such as the vertical resistance and cohesion strength of the electrode, and a secondary battery and module using the same.

### <Negative Electrode>

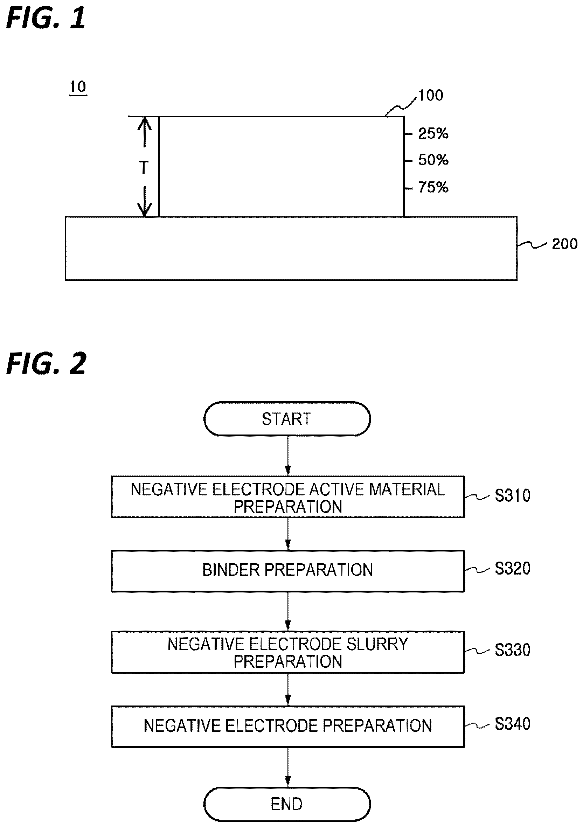

Referring to FIG. 1, a negative electrode 10 according to one embodiment of the present disclosure has a structure in which a negative electrode active material layer 100 containing a silicon-based active material is formed on a current collector 200. The negative electrode active material layer 100 may further contain, for example, a conductive material and a binder, in addition to the silicon-based active material. The current collector 200 may be, for example, a copper foil.

According to one embodiment of the present disclosure, based on a distance T between opposing first and second surfaces of the negative electrode active material layer 100, when a cohesion strength is measured respectively at positions corresponding to 25%, 50%, and 75% of the distance T from the upper first surface toward the lower second surface, the average of the measured cohesion strengths ranges from approximately 1 MPa to 20 MPa, and the deviation of the measured cohesion strengths is equal to or less than approximately 140%.

The "cohesion strength" as used herein is distinguished from "adhesion." The "cohesion strength" refers to the interaction between active materials within the negative electrode active material layer, expressed in MPa. The "adhesion" refers to the interaction between two different materials, expressed in gf/mm.

The cohesion strength may depend on the composition and process conditions of the electrode. For example, the cohesion strength may depend on the type and content of the active material, binder, and conductive material. In one embodiment, the cohesion strength may depend on the content and type of the binder, temperature rising conditions during electrode slurry drying, and the drying temperature and time. For example, a solvent may be rapidly evaporated at a high drying temperature after electrode slurry coating by varying the temperature gradient during electrode slurry drying, and the evaporation rate may then be controlled by lowering the drying temperature after a certain amount of solvent is evaporated. This maintains uniform distribution of compositions within the electrode, achieving the negative electrode active material layer with the cohesion strength described above.

According to one embodiment, an initial high drying temperature in the step of evaporating a certain amount of solvent may range from approximately 130 °C to 200 °C, for example, 140 °C to 160 °C, and may involve evaporation of approximately 50% to 90%, or approximately 60% to 80%, of the solvent.

According to one embodiment, the step of controlling the evaporation rate by lowering the drying temperature may be performed at approximately 80 °C to 120 °C, for example, approximately 90 °C to 110 °C.

The cohesion strength as used herein may be measured by a SAICAS (Surface And Interfacial Cutting Analysis System) electrode oblique cutting method. The SAICAS electrode oblique cutting method uses a diamond cutting blade to obliquely cut a thin film sample from the surface to the interface, thereby measuring the cohesion strength. The measurement of the cohesion strength may be conducted using SAICAS EN-EX equipment from DAIPLA WINTES Co., Ltd. (Japan). For example, when a SAICAS constant-speed mode is set, the vertical cutting speed is set to 0.2 µm/s and the horizontal cutting speed is set to 2 µm/s to perform the oblique cutting. The cohesion strength is measured at positions corresponding to 25%, 50%, and 75% of the total thickness from the first surface of the negative electrode active material layer. This process is repeated three times to obtain the average cohesion strength value at each position. Here, the first surface of the negative electrode active material layer 100 may be opposite to the surface of the negative electrode active material layer 100 facing the current collector, for example, the upper surface in FIG. 1. The distance T between the opposing first and second surfaces of the negative electrode active material layer 100 may be obtained by measuring the total thickness of the electrode and the thickness of the current collector 200 using a thickness gauge, respectively, and then calculating the difference between the total thickness of the electrode and the thickness of the current collector 200.

In one embodiment of the present disclosure, the average cohesion strength at positions corresponding to 25%, 50%, and 75% of the total thickness from the first surface may range from approximately 1 MPa to 20 MPa.

During the charge and discharge of the electrode, the active material undergoes contraction or expansion within the electrode, causing internal stress of the electrode. The present disclosure maintains an appropriate level of the cohesion strength to withstand this stress. When the cohesion strength of the electrode satisfies the aforementioned range, conductive connectivity may be maintained even when contraction or expansion occurs during the charge and discharge of the electrode.

In one embodiment of the present disclosure, the average cohesion strength may range from approximately 1 MPa to 20 MPa, or approximately 1 MPa to 15 MPa.

In one embodiment of the present disclosure, the deviation of the cohesion strengths at positions corresponding to 25%, 50%, and 75% of the total thickness from the first surface may be equal to or less than approximately 140%.

The deviation of the cohesion strength may be calculated as the difference between the maximum cohesion strength and the minimum cohesion strength, divided by the average cohesion strength and then multiplied by 100. When the deviation of the cohesion strength satisfies the aforementioned range, uniform cohesion throughout the electrode thickness may be achieved, thereby minimizing capacity degradation.

In one embodiment of the present disclosure, the deviation of the cohesion strength may be approximately 140% or less, or approximately 100% or less, or approximately 50% or less.

As used herein, "vertical resistance" refers to the electrical resistance encountered by current flowing through the thickness direction (e.g., the T-direction) of the electrode.

In one embodiment herein, the vertical resistance of the negative electrode active material layer 100 may range from approximately 0.005 Ω to 0.3 Ω. When the vertical resistance of the negative electrode active material layer 100 satisfies the aforementioned range, electrode degradation during charge and discharge may be minimized, resulting in a secondary battery with excellent lifespan performance.

The vertical resistance may be measured by grounding circular metal plates on the upper and lower surfaces of the electrode 10 and then applying a voltage. The circular metal plates are made of low-resistance Cu, which is surface-coated with Au, and conductive carbon paper is attached to the surfaces of the circular metal plates to reduce contact resistance with the electrode surface.

FIG. 2 is a flowchart illustrating a major process of preparing a negative electrode according to one embodiment of the present disclosure.

In the major process of preparing the negative electrode according to one embodiment of the present disclosure, a silicon-based active material is first prepared for the preparation of a negative electrode active material (S310), followed by the preparation of a binder to be mixed with the silicon-based active material (S320). Subsequently, the silicon-based active material, binder, and additionally a conductive material and a dispersant are mixed to prepare a negative electrode slurry (S330). The prepared negative electrode slurry is then coated onto a current collector such as a copper foil, and is dried at an appropriate temperature to prepare a negative electrode (S340).

Next, each preparing step will be described in more detail.

In one embodiment, the silicon-based active material includes at least one of a silicon oxide, silicon, and a silicon carbon composite. For example, the silicon-based active material includes at least one of SiOₓ(0<x<2), Si/C, and SiOₓ (x=0). The silicon-based active material may include only one type, or may include two or more types together.

In one embodiment, the silicon-based active material may be a silicon carbon composite. The silicon carbon composite is a composite of Si and C, where Si and C (*e.g.,* graphite) each exist. The silicon carbon composite may be denoted as Si/C herein. The silicon carbon composite may be composed of Si and C that are not bonded to each other, but may also contain additional components as needed. For example, the silicon carbon composite may or may not contain a silicon carbide, denoted as SiC. When the silicon carbon composite contains a silicon carbide, the content of silicon carbide is equal to or less than approximately 3 wt%. The silicon carbon composite may exist in a crystalline, amorphous, or mixed state thereof. In one example, C in the silicon carbon composite may exist in an amorphous state.

According to one embodiment, the silicon carbon composite may be particles including porous carbon particles and silicon provided on at least a part of the interior and surface of the porous carbon particles; or particles including porous silicon particles and carbon provided on at least a part of the interior and surface of the porous silicon particles.

According to one embodiment, the silicon carbon composite is particles including porous carbon particles and silicon provided on at least a part of the interior and surface of the porous carbon particles. The silicon may be formed by depositing silicon on the porous carbon particles using a silane gas. When necessary, a carbon layer may be further formed on the surface of the silicon carbon composite. The carbon layer may impart electrical conductivity and enhance the initial efficiency, lifespan characteristics, and capacity characteristics of the secondary battery. The total weight of the carbon layer may range from approximately 5 wt% to 40 wt% based on the total 100 wt% of the silicon carbon composite particles. The carbon layer may contain at least one of amorphous carbon and crystalline carbon.

According to one embodiment, the silicon carbon composite may be particles including porous silicon particles and carbon provided on at least a part of the interior and surface of the porous silicon particles. This may be formed by etching a silicon oxide to form porous silicon particles such as an Si matrix, followed by coating with carbon. The above description regarding the carbon layer may apply to this carbon coating.

According to one embodiment, the silicon carbon composite may exhibit a specific surface area of approximately 0.5 m²/g to 10 m²/g, as measured by specific surface area analysis (Brunauer-Emmett-Teller (BET) method), a pore volume of approximately 0.005 cm³/g to 0.03 cm³/g, and a pore size of approximately 10 nm to 20 nm, as measured by the BET method. The pore volume of the silicon carbon composite, as measured by mercury intrusion porosimetry, may range from approximately 0.005 cm³/g to 0.03 cm³/g.

According to one embodiment, the silicon carbon composite may exhibit a D₉₀ particle diameter of approximately 5 µm to 15 µm, a D₅₀ particle diameter of approximately 1 µm to 10 µm, a Dₘᵢₙ of approximately 1 µm to 3 µm, and a Dₘₐₓ of approximately 17 µm to 23 µm. The average particle diameter D₅₀ as used herein may be defined as a particle diameter corresponding to 50% of the cumulative volume in the particle diameter distribution curve. The average particle diameter D₅₀ may be measured, for example, using a laser diffraction method. The laser diffraction method generally enables the measurement of particle diameters from the submicron range up to several millimeters, providing high reproducibility and high resolution in the results.

One embodiment provides a negative electrode active material containing the silicon carbon composite according to the above-described embodiment.

One embodiment provides a negative electrode composition containing the negative electrode active material according to the above-described embodiment; a binder, and a conductive material.

According to one embodiment, the silicon carbon composite may be included in an amount of approximately 0.1 to 15 parts by weight, and for example, may be included in an amount of approximately 1 to 10 parts by weight, based on 100 parts by weight of the negative electrode active material.

According to one embodiment, the negative electrode active material may further include a graphite-based active material. The graphite-based active material may be included in an amount of approximately 90 parts by weight or more and 99.9 parts by weight or less, for example, approximately 90 to 99 parts by weight, based on the total 100 parts by weight of the negative electrode active material included in the negative electrode composition. The graphite-based active material may include at least one of natural graphite and synthetic graphite. If the graphite-based active material includes both natural graphite and synthetic graphite, the weight ratio of the synthetic graphite to natural graphite may range from approximately 1:9 to 9:1, for example, approximately 3:7 to 7:3. For example, the natural graphite may range from approximately 10 to 70 parts by weight, and the synthetic graphite may range from approximately 30 to 90 parts by weight, based on 100 parts by weight of the graphite-based active material.

The natural graphite refers to graphite that occurs naturally, examples of which include scaled graphite, scaly graphite, or soil graphite. The natural graphite has advantages of being abundant and low in cost, with a high theoretical capacity and compaction density, enabling high power output.

According to one embodiment of the present disclosure, the negative electrode active material layer further contains a binder and a conductive material, and the binder may be an aqueous binder.

The binder may include at least one selected from polyvinylidene fluoride-hexafluoropropylene copolymer (PVDF-co-HFP), polyvinylidene fluoride, polyacrylonitrile, polyamide, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene butadiene rubber (SBR), fluororubber, poly acrylic acid, and substances in which hydrogen of these is substituted with, for example, Li, Na or Ca, and may also include various copolymers thereof.

According to one embodiment, the binder may be a mixture of a high-elasticity copolymer and a rubber-based binder.

According to one embodiment, the high-elasticity copolymer refers to a high molecular copolymer with an elastic modulus equal to or greater than 500 MPa.

According to one embodiment, the high-elasticity copolymer may be one of polyvinylidene fluoride, polyacrylic acid, and carboxymethyl cellulose (CMC).

In one embodiment, the rubber-based binder may be styrene butadiene rubber (SBR).

According to one embodiment, the total binder content may range from approximately 1 to 20 parts by weight, or approximately 1 to 15 parts by weight, or approximately 2 to 12 parts by weight, based on 100 parts by weight of the negative electrode active material composition.

According to one embodiment, the weight ratio of the high-elasticity copolymer to the rubber-based binder may be range from approximately 1:12 to 12:1, or approximately 1:8 to 8:1, or approximately 1:4 to 4:1.

The conductive material is not particularly limited as long as it has conductivity without causing chemical changes in the battery. Examples of the conductive material may include graphite such as natural graphite or synthetic graphite; carbon black such as acetylene black, Ketjen black, channel black, furnace black, lamp black, or thermal black; conductive fibers such as carbon fibers or metal fibers; conductive tubes such as a carbon nanotube; metal powder such as fluorocarbon, aluminum, or nickel powder; conductive whiskers such as zinc oxide or potassium titanate; conductive metal oxide such as titanium oxide; and a conductor such as a polyphenylene derivative.

In one embodiment herein, the negative electrode conductive material may include one or more selected from a point-like conductive material and a linear conductive material.

In one embodiment herein, the negative electrode conductive material may include one or more selected from a point-like conductive material and a linear conductive material, and may further include a planar conductive material.

In one embodiment herein, the negative electrode conductive material may include a point-like conductive material and a linear conductive material.

In one embodiment herein, the point-like conductive material may be used to enhance the conductivity of the negative electrode, and refers to a conductive material that has conductivity without causing chemical changes. Examples of the point-like conductive material may be at least one selected from natural graphite, synthetic graphite, carbon black, acetylene black, Ketjen black, channel black, furnace black, lamp black, thermal black, conductive fibers, fluorocarbon, aluminum powder, nickel powder, zinc oxide, potassium titanate, titanium oxide, and polyphenylene derivative. In one embodiment, the point-like conductive material may include carbon black as it provides high conductivity and excellent dispersibility.

In one embodiment herein, the BET specific surface area of the point-like conductive material may be approximately 10 m²/g or more and 70 m²/g or less, and for example, may be 15 m²/g or more and 65 m²/g or less, or 20 m²/g or more and 60 m²/g or less.

In one embodiment herein, the particle diameter of the point-like conductive material may range from approximately 10 nm to 100 nm, and for example, may range from 20 nm to 90 nm, or 20 nm to 60 nm.

In one embodiment herein, the linear conductive material may be a carbon nanotube. The carbon nanotube may be a bundle-type carbon nanotube. The bundle-type carbon nanotube may include a plurality of carbon nanotube units. Here, the term 'bundle-type' refers to a secondary shape in the form of a bundle or rope in which a plurality of carbon nanotube units are arranged parallel or entangled with the longitudinal axes thereof in substantially the same orientation, unless otherwise stated. The carbon nanotube unit has a graphite sheet that is rolled into a nanoscale-diameter cylinder form with an sp2 bonding structure. Additionally, the carbon nanotube unit may exhibit conductive or semiconductor properties depending on the rolled angle and structure of the graphite surface. The bundle-type carbon nanotube may be more uniformly dispersed during negative electrode preparation compared to an entangled-type carbon nanotube, and may smoothly form a conductive network within the negative electrode, thereby enhancing the conductivity of the negative electrode.

In one embodiment herein, the linear conductive material may include any one selected from a single-walled carbon nanotube (SWCNT) and a multi-walled carbon nanotube (MWCNT).

In one embodiment herein, the multi-walled carbon nanotube (MWCNT) may be a thin-walled carbon nanotube (TWCNT) having 2 to 5 walls.

The number-average length of the single-walled carbon nanotube (SWCNT) and the thin-walled carbon nanotube (TWCNT) may range from 0.5 µm to 8.0 µm, which may be measured using atomic force microscopy (AFM). When the number-average length of the single-walled carbon nanotube (SWCNT) and the thin-walled carbon nanotube (TWCNT) satisfies the above range, the conductive connectivity within the electrode may be maintained during the expansion or contraction of the electrode due to charge and discharge, resulting in excellent lifespan.

In one embodiment herein, the linear conductive material may have a BET specific surface area of approximately 100 m²/g or more and 100,000 m²/g or less, and for example, may be 500 m²/g or more and 10,000 m²/g or less, or 1,000 m²/g or more and 5,000 m²/g or less.

Additionally, in one embodiment herein, the aspect ratio of the linear conductive material may be approximately 500 or more, for example, 1,000 or more, or 10,000 or more, and may be 1,000,000 or less, or 100,000 or less.

In one embodiment herein, the planar conductive material may enhance conductivity by increasing surface contact between silicon particles within the negative electrode, while simultaneously suppressing the disconnection of conductive paths due to volume expansion. The planar conductive material may be described as a plate-shaped conductive material or a bulk-type conductive material.

In one embodiment herein, the planar conductive material may include at least one selected from plate-like graphite, graphene, graphene oxide, and graphite flakes, and may be, for example, plate-like graphite.

In one embodiment herein, the average particle diameter D₅₀ of the planar conductive material may range from approximately 2 µm to 7 µm, and for example, may range from 3 µm to 6 µm, or 4 µm to 5 µm. When the average particle diameter satisfies the above range, it allows a sufficient particle size to facilitate dispersion without causing excessive increase in viscosity of the negative electrode slurry. Therefore, this results in excellent dispersion performance when dispersed using the same equipment and time.

In one embodiment herein, the planar conductive material in the negative electrode composition may have a D₁₀ of approximately 0.5 µm or more and 1.5 µm or less, a D₅₀ of approximately 2.5 µm or more and 3.5 µm or less, and a D₉₀ of approximately 7.0 µm or more and 15.0 µm or less.

In one embodiment herein, the planar conductive material may be a high-specific-surface-area planar conductive material with a high BET specific surface area or a low-specific-surface-area planar conductive material.

In one embodiment herein, the planar conductive material may have a BET specific surface area equal to or greater than approximately 5m²/g.

In another embodiment, the planar conductive material may have a BET specific surface area of approximately 5 m²/g or more and 500 m²/g or less, and for example, approximately 5 m²/g or more and 300 m²/g or less, or approximately 5 m²/g or more and 250 m²/g or less.

In another embodiment, the planar conductive material may be a high-specific-surface-area planar conductive material, and the BET specific surface area thereof may satisfy the range of 50 m²/g or more and 500 m²/g or less, and, for example, approximately 80 m²/g or more and 300 m²/g or less, or approximately 100 m²/g or more and 300 m²/g or less.

In another embodiment, the planar conductive material may be a low-specific-surface-area planar conductive material, and the BET specific surface area thereof may satisfy the range of approximately 5 m²/g or more and 40 m²/g or less, and for example, approximately 5 m²/g or more and 30 m²/g or less, or approximately 5 m²/g or more and 25 m²/g or less.

In one embodiment herein, the negative electrode conductive material may be included in an amount of approximately 0.1 parts by weight or more and 40 parts by weight or less based on 100 parts by weight of the negative electrode active material layer composition.

In one embodiment herein, the negative electrode conductive material may include at least one of a single-walled carbon nanotube (SWCNT) and a thin-walled carbon nanotube (TWCNT). When the negative electrode conductive material includes at least one of the SWCNT and the TWCNT, it may minimize damage to conductive connectivity even under volume expansion during charge and discharge due to the silicon-based active material, thereby enhancing the lifespan performance of the electrode.

For example, a sum of the at least one of the single-walled carbon nanotube (SWCNT) and the thin-walled carbon nanotube (TWCNT) may be included in an amount of approximately 0.001 parts by weight or more and 0.3 parts by weight or less based on 100 parts by weight of the negative electrode active material layer composition.

In one embodiment herein, the negative electrode conductive material may further include approximately 0.5 parts by weight to 10 parts by weight of a point-like conductive material and/or a bulk-type conductive material, in addition to at least one of the single-walled carbon nanotube (SWCNT) and the thin-walled carbon nanotube (TWCNT).

One embodiment of the present disclosure provides the negative electrode 10 prepared using the negative electrode composition that includes the negative electrode active material, binder, and conductive material of the above-described embodiments.

For example, the negative electrode 10 may include the negative electrode current collector 200 and the negative electrode active material layer 100 disposed on at least one surface of the negative electrode current collector. The negative electrode active material layer includes the negative electrode composition according to the above-described embodiments.

The negative electrode active material layer may be formed by applying a negative electrode slurry containing the above-described negative electrode composition to at least one surface of the negative electrode current collector, followed by drying and rolling.

The negative electrode current collector 200 may be any conductive material that provides conductivity without causing chemical changes in the battery, and is not particularly limited. For example, the current collector 200 may be made of copper, stainless steel, aluminum, nickel, titanium, sintered carbon, or aluminum or stainless steel surface-treated with, for example, carbon, nickel, titanium, or silver. For example, transition metals such as copper and nickel, which effectively adsorb carbon, may also be used as the current collector. The thickness of the current collector 200 may range from approximately 6 µm to 20 µm, but is not limited thereto.

The negative electrode slurry may include a solvent for negative electrode slurry formation. For example, from a viewpoint of facilitating dispersion of the components, the solvent for negative electrode slurry formation may include at least one selected from distilled water, ethanol, methanol, and isopropyl alcohol, and for example, may include distilled water.

### <Secondary Battery>

A lithium secondary battery according to one embodiment of the present disclosure may include the negative electrode 10 according to the above-described embodiment. The lithium secondary battery may include a negative electrode, a positive electrode, and a separator interposed between the positive electrode and the negative electrode, and may further include an electrolyte. Since the positive electrode has been described above, a detailed description will be omitted.

The positive electrode may include a positive electrode current collector and a positive electrode active material layer that is formed on the positive electrode current collector and contains a positive electrode active material.

In the positive electrode, the positive electrode current collector is not particularly limited as long as it has conductivity and does not cause chemical changes in the battery. For example, the positive electrode current collector may be made of stainless steel, aluminum, nickel, titanium, sintered carbon, or aluminum or stainless steel surface-treated with, for example, carbon, nickel, titanium, or silver. Further, the positive electrode current collector may typically have a thickness of approximately 3 µm to 500 µm, and the surface thereof may have fine irregularities to increase the adhesion of the positive electrode active material. For example, the positive electrode current collector can be used in various forms such as a film, sheet, foil, net, porous body, foam, and non-woven fabric.

The positive electrode active material may be any commonly used positive electrode active material. For example, the positive electrode active material may include a layered compound such as lithium cobalt oxide (LiCoO₂) or lithium nickel oxide (LiNiO₂), or a compound substituted with one or more transition metals; lithium iron oxide such as LiFe₃O₄; lithium manganese oxide such as those represented by a chemical formula of Li_{1+c1}Mn_{2-c1}O₄ (0 ≤ c1 ≤ 0.33), LiMnO₃, LiMn₂O₃, or LiMnO₂; lithium copper oxide (Li₂CuO₂); vanadium oxide such as LiV₃O₈, V₂O₅, or Cu₂V₂O₇; Ni-site type lithium nickel oxide such as those represented by a chemical formula of LiNi_{1-c2}M_{c2}O₂ (here, M is at least one selected from Co, Mn, Al, Cu, Fe, Mg, B, and Ga, and satisfies 0.01 ≤ c2 ≤ 0.5); lithium manganese composite oxide such as those represented by a chemical formula of LiMn_{2-c3}M_{c3}O₂(here, M is at least one selected from Co, Ni, Fe, Cr, Zn and Ta, and satisfies 0.01 ≤ c3 ≤ 0.1) or Li₂Mn₃MO₈ (here, M is at least one selected from Fe, Co, Ni, Cu and Zn); or LiMn₂O₄ in which a part of Li in the chemical formula is substituted with alkali earth metal ions, etc., but is not limited to these. The positive electrode may include Li-metal.

The positive electrode active material layer may contain a positive electrode conductive material and a positive electrode binder, in addition to the above-described positive electrode active material.

At this time, the positive electrode conductive material is used to impart conductivity to the electrode, and may be employed without specific limitations as long as it does not cause chemical changes in the battery and has electronic conductivity. For example, the positive electrode conductive material may include graphite such as natural graphite or synthetic graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide or potassium titanate; conductive metal oxide such as titanium oxide; or conductive polymers such as a polyphenylene derivative. These may be used alone or as a mixture of two or more of these.

In addition, the positive electrode binder serves to enhance the adhesion between positive electrode active material particles and the adhesion between the positive electrode active material and the positive electrode current collector. For example, the positive electrode binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluororubber, and various copolymers thereof. These may be used alone or as a mixture of two or more of these.

The separator is used to separate the negative electrode and the positive electrode, and provides a passage for lithium ion migration. Any separator conventionally used in secondary batteries may be employed without specific limitations, particularly those with low resistance to ion migration while exhibiting excellent electrolyte wettability. For example, the separator may include a porous polymer film made of, for example, a polyolefin-based polymer such as ethylene homopolymer, propylene homopolymer, ethylene/butene copolymer, ethylene/hexene copolymer, and ethylene/methacrylate copolymer, or a stacked structure of two or more layers of these may also be used. Additionally, common porous nonwoven fabrics such as those made of high-melting-point glass fibers or polyethylene terephthalate fibers may be employed. Additionally, a coated separator containing ceramic components or polymer materials may also be used to secure heat resistance or mechanical strength, and may optionally be used in a single-layer or multi-layer structure.

The electrolyte may include an organic liquid electrolyte, inorganic liquid electrolyte, solid polymer electrolyte, gel-type polymer electrolyte, solid inorganic electrolyte, or molten inorganic electrolyte, which may be employed in the production of lithium secondary batteries, but is not limited to these.

For example, the electrolyte may include a non-aqueous organic solvent and a metal salt.

Examples of the non-aqueous organic solvent may include an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, and ethyl propionate.

Among the carbonate-based organic solvents, cyclic carbonates such as ethylene carbonate and propylene carbonate exhibit high viscosity and high dielectric constants, making them effective at dissociating a lithium salt. Combining these with low-viscosity, low-dielectric constant linear carbonates such as dimethyl carbonate and diethyl carbonate in an appropriate ratio may yield an electrolyte with high electrical conductivity.

The metal salt may include a lithium salt, and examples of the lithium salt that is easily dissolved in the non-aqueous electrolyte may include those with one or more types of anions selected from F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

In addition to the electrolyte components, the electrolyte may further include one or more additives, aimed, for example, at improving the lifespan characteristics of the battery, suppressing capacity degradation, or enhancing the discharge capacity of the battery, such as a haloalkylene carbonate compound such as difluoroethylene carbonate, pyridine, triethyl phosphite, triethanolamine, cyclic ether, ethylene diamine, n-glyme, hexamethyl phosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, or aluminum trichloride.

According to another embodiment of the present disclosure, a battery module including the secondary battery as a unit cell and a battery pack including the battery module is provided. Since the battery module and battery pack include the secondary battery with a high capacity, high rate characteristics, and excellent cycle characteristics, they may be used as a power supply for medium- and large-scale devices such as electric vehicles, hybrid electric vehicles, plug-in hybrid electric vehicles, and power storage systems.

According to another embodiment of the present disclosure, an electric vehicle including the battery pack is provided.

The following examples are provided to help the understanding of the present disclosure, but these examples are merely illustrative of the present disclosure. It will be apparent to those skilled in the art that various changes and modifications may be made within the scope and technical idea of the present disclosure, and such changes and modifications naturally fall within the appended claims.

### Mode for Carrying Out the Invention

### Example 1

### (1) Preparation of Silicon Carbon Composite

An amorphous porous carbon scaffold (0.5 g) with a specific surface area of 1500 m²/g to 1800 m²/g and a pore volume of 0.7 cm³/g to 0.85 cm³/g was placed into a ceramic crucible and was positioned at the center of a horizontal tube furnace. After sealing the furnace and purging it with a nitrogen gas, the furnace temperature was increased from 400 °C to 500 °C at a rate of 10 °C/min. Then, a silane gas and hydrogen gas were introduced at varying flow rates and maintained for 10 to 30 minutes. Subsequently, the furnace temperature was further increased to 780 °C to 830 °C at 10 °C /min, and a propane gas was introduced at varying flow rates for 10 to 30 minutes. This process yielded a porous silicon carbon composite with the characteristics illustrated in Table 1 below.

### (2) Preparation of Binder

In a reactor equipped with a stirrer, a thermometer, a reflux condenser, and a nitrogen gas inlet pipe, (meth)acrylamide (50% aqueous solution) and acrylic acid (AA, 80% aqueous solution) were mixed at a molar ratio of 6:4, and a polymerization initiator (ammonium persulfate) was added in an amount of 0.1 parts by weight based on 100 parts by weight of monomers ((meth)acrylamide and AA). The reaction was conducted at 80 °C for 6 hours to prepare a polymer in an aqueous solution state. Next, the resulting polymer solution was neutralized with an aqueous solution of NaOH to prepare a (meth)acrylic binder.

### (3) Preparation of Negative Electrode Slurry

A mixture of porous silicon carbon composite particles prepared in Example 1 and natural graphite was used as a negative electrode active material. A single-walled carbon nanotube (SWCNT) (number-average length=1.8 µm) was used as a conductive material, while CMC and SBR binders were used. A negative electrode composition was prepared with the following mixing weight ratio: active material (natural graphite:Si/C=85:15): SWCNT: dispersant(polyvinylpyrrolidone (PVP)): CMC: SBR=95.85: 0.1: 0.15: 0.9: 3.0.

Water was added as a solvent to prepare a negative electrode slurry. Here, the water content was adjusted considering coating properties, viscosity, and solid content. The viscosity of the prepared negative electrode slurry was adjusted to approximately 8000 cps.

### (4) Preparation of Negative Electrode

The negative electrode slurry was coated onto a 18 µm-thick copper foil. The solvent was dried under hot air conditions at 150 °C to remove 70% of the solvent, followed by drying the remaining 30% of the solvent at 100 °C. This process formed an electrode active material layer with a thickness of 50 µm on one side of the copper foil, and the coated foil was punched into a circular electrode with a diameter of 14 Φ (mm) to prepare a test electrode (negative electrode). A 0.3 mm-thick metal lithium foil was used as a positive electrode. A 0.1 mm-thick porous polyethylene sheet was used as a separator. In addition, a used electrolyte was comprised of a mixed solvent of ethylene carbonate (EC) and diethyl carbonate (DEC) in a volume ratio of 1:1 in which a lithium salt such as LiPF₆ was dissolved to a concentration of approximately 1 mol/L.

### Example 2

A mixture of the porous silicon carbon composite particles prepared in Example 1 and natural graphite was used as a negative electrode active material. Two types of conductive materials, i.e. a particle-type conductive material (SFG6L) and SWCNT (number-average length of 2.3 µm), were used (in Example 1, only SWCNT (number-average length of 1.8 µm) was used as a single conductive material). The aqueous binder of Example 1 was used. A negative electrode composition was prepared with the following weight ratio: negative electrode active material (natural graphite:Si/C=90:10): particle-type conductive material (SFG6L): SWCNT (number-average length=2.3 µm): dispersant: (meth)acrylic binder: SBR=81: 9.6: 0.3: 0.5: 8.0: 0.6. Except for this difference, a negative electrode was prepared using the same method as in Example 1. The weight ratio of each component was altered in Example 2, compared to Example 1. In addition, two types of conductive materials were used in Example 2, compared to the single conductive material in Example 1. The ratio of natural graphite to Si/C in the negative electrode active material in Example 1 was 85:15, whereas it was 90:10 in Example 2.

### Comparative Example 1

A negative electrode was prepared using the same method as in Example 1, except that a negative electrode composition was prepared with following mixing weight ratio; negative electrode active material (natural graphite:Si/C=85:15): SWCNT: dispersant: CMC: SBR=95.85: 0.1: 0.15: 0.3: 3.8. When comparing the weight ratio of each composition with Example 1, the amount of CMC was decreased, while the amount of SBR was increased in Comparative Example 1.

### Comparative Example 2

In the step of (4) Preparation of Negative electrode in Example 1, 70% of the solvent was dried under hot air conditions at 150 °C. In contrast, in Comparative Example 2, 100% of the solvent was dried under hot air conditions at 150 °C. Except for this difference, a negative electrode was prepared using the same method as in Example 1.

### Comparative Example 3

In Comparative Example 3, a single conductive material, SWCNT (number-average length=0.15 µm), was used. Except for this difference, a negative electrode was prepared using the same method as in Example 2, which employed two types of conductive materials: particle-type conductive material (SFG6L) and SWCNT (number-average length=2.3 µm).

### Experimental Example 1. Battery Production and Battery Performance Evaluation

The cohesion strengths at positions corresponding to 25%, 50%, and 75% of the total thickness from the first surface of the negative electrodes prepared in Examples 1 and 2 and Comparative Examples 1 to 3 were measured using the SAICAS oblique cutting method. The average values and deviations were calculated and are illustrated in Table 1 below.

**[Table 1]**

| | Cohesion Strength at 25% position (MPa) | Cohesion Strength at 50% position (MPa) | Cohesion Strength at 75% position (MPa) | (MPa) Average Value | (MPa) Deviation (%) | Vertical Resistance (Ω) |
|---|---|---|---|---|---|---|
| Example 1 | 3.5 | 4.1 | 2.9 | 3.5 | 34% | 0.015 |
| Example 2 | 9.5 | 12.0 | 10.4 | 10.6 | 15% | 0.25 |
| Comparative Example 1 | 0.65 | 0.5 | 0.35 | 0.54 | 55.5% | 0.02 |
| Comparative Example 2 | 3.7 | 2.9 | 0.25 | 2.3 | 150% | 0.02 |
| Comparative Example 3 | 10.1 | 12.3 | 9.8 | 10.7 | 23% | 0.89 |

Referring to Table 1, the average cohesion strength values at the 25%, 50%, and 75% positions in Examples 1 and 2 were 3.5 MPa and 10.6 MPa, respectively, and the deviations from the average values were 34% and 15%, respectively. Additionally, the vertical resistances in Examples 1 and 2 were 0.015 Ω and 0.25 Ω, respectively. As seen in Table 1, in Examples 1 and 2, the average cohesion strength ranged from approximately 1 MPa to 20 MPa, the deviation of the cohesion strength was equal to or less than approximately 140%, and the vertical resistance was maintained at approximately 0.005 Ω to 0.3 Ω.

In the meantime, in Comparative Examples 1 to 3, the average cohesion strength values were 0.54 MPa, 2.3 MPa, and 10.7 MPa, respectively, and the deviations from the average values were 55.5%, 150%, and 23%, respectively. Additionally, the vertical resistances in Comparative Examples 1, 2, and 3 were 0.02 Ω, 0.02 Ω, and 0.89 Ω, respectively. The results indicate that Comparative Example 1 had an average cohesion strength of less than 1 MPa, Comparative Example 2 had a cohesion strength deviation exceeding 140%, and Comparative Example 3 had a vertical resistance exceeding 0.3 Ω.

### Experimental Example 2. Battery Lifespan Performance Evaluation

The negative electrode prepared in each of Examples 1 and 2 and Comparative Examples 1 to 3, the positive electrode (the same as that used in Example 1), the separator (the same as that used in Example 1), and the electrolyte (the same as that used in Example 1)were sealed in a stainless steel container to manufacture evaluation coin cells with a thickness of 2 mm and a diameter of 32 mm. The coin cells were charged with a constant current of 0.05 C until the voltage reached 0.01 V, and then discharged with a constant current of 0.05 C until the voltage reached 1.0 V to determine charge and discharge capacities. The process was repeated for 30 cycles to calculate the capacity retention rates. The results are illustrated in Table 2 below.

**[Table 2]**

| | Charge/Discharge Capacity (mAh/g) | Capacity Retention Rate (%) |
|---|---|---|
| Example 1 | 585 | 88 |
| Example 2 | 1640 | 84 |
| Comparative Example 1 | 580 | 56 |
| Comparative Example 2 | 582 | 58 |
| Comparative Example 3 | 1645 | 45 |

As seen in Table 2, the cells satisfying the average cohesion strength value, deviation, and vertical resistance criteria of the present disclosure exhibited excellent capacity retention rates.

Comparative Example 1 corresponds to a case where the average cohesion strength is less than 1 MPa. It can be confirmed that, during charge and discharge cycles of the electrode, the stress caused by the contraction or expansion of the active material within the electrode leads to a low capacity retention rate.

Comparative Example 2 corresponds to a case where the deviation of the cohesion strength exceeds 140%. The non-uniform cohesion strength of the negative electrode active material layer leads to insufficient formation of a conductive network, resulting in a low capacity retention rate.

Comparative Example 3 corresponds to a case where the vertical resistance exceeds 0.3 Ω. Due to poor conductive connectivity in the initial electrode, significant capacity degradation occurs during charge and discharge.

While the above has been described with reference to the embodiments of the present disclosure, it will be understood by those skilled in the art or having ordinary knowledge of the art that various modifications and changes can be made to the present disclosure without departing from the technical scope of various embodiments of the present disclosure described in the claims to be described later, which will be described below. Accordingly, the technical scope of the present disclosure is not limited to what is described in the detailed description of the disclosure but should be defined by the patent claims.

## Claims

1. A negative electrode comprising a negative electrode active material layer that conprises a silicon-based active material,
wherein based on a total thickness defined as a distance between opposing first and second surfaces of the negative electrode active material layer, when a cohesion strength is measured respectively at positions corresponding to 25%, 50%, and 75% of the total thickness from the first surface, an average of the measured cohesion strengths ranges from 1 MPa to 20 MPa, a deviation of the measured cohesion strengths is equal to or less than 140%, and
a vertical resistance ranges from 0.005 Ω to 0.3 Ω.

2. The negative electrode according to claim 1, wherein the deviation of the measured cohesion strengths is equal to or less than 50%.

3. The negative electrode according to claim 1, wherein the silicon-based active material comprises at least one selected from the group of SiOₓ(0<x<2), a silicon carbon composite, and SiOₓ (x=0).

4. The negative electrode according to claim 1, wherein the negative electrode active material layer further comprises a graphite-based active material.

5. The negative electrode according to claim 1, wherein the negative electrode active material layer further comprises a binder and a conductive material.

6. The negative electrode according to claim 5, wherein the conductive material comprises one or more selected from a point-like conductive material and a linear conductive material.

7. The negative electrode according to claim 5, wherein the conductive material comprises at least one selected from the group of a single-walled carbon nanotube (SWCNT) and a thin-walled carbon nanotube (TWCNT).

8. The negative electrode according to claim 5, wherein the conductive material comprises a single-walled carbon nanotube (SWCNT).

9. The negative electrode according to claim 7, wherein a sum of the at least one selected from the group of the single-walled carbon nanotube (SWCNT) and the thin-walled carbon nanotube (TWCNT) ranges from 0.001 parts by weight or more and 0.3 parts by weight or less based on 100 parts by weight of the negative electrode active material layer.

10. The negative electrode according to claim 5, wherein the binder comprises a high molecular copolymer with an elastic modulus equal to or greater than 500 MPa and a rubber-based binder.

11. A lithium secondary battery comprising the negative electrode according to any one of claims 1 to 10, a positive electrode, and a separator.

12. A battery module comprising the lithium secondary battery according to claim 11 as a unit cell.

13. A battery pack comprising the lithium secondary battery according to claim 11.

14. A battery pack comprising the battery module according to claim 12.

15. An electric vehicle comprising the battery pack according to claim 13.

16. An electric vehicle comprising the battery pack according to claim 14.

17. A method of preparing a negative electrode comprising a negative electrode active material layer that comprises a silicon-based active material, the method comprising
adjusting one or more of a weight ratio of an entire composition comprised in the negative electrode active material layer and a type and content of an active material/binder/conductive material comprised in the negative electrode active material layer, thus adjusting a cohesion strength depending on a depth of the negative electrode active material layer and vertical resistance.

18. The method according to claim 17, wherein based on a total thickness defined as a distance between opposing first and second surfaces of the negative electrode active material layer, when the cohesion strength is measured respectively at positions corresponding to 25%, 50%, and 75% of the total thickness from the first surface, an average of the measured cohesion strengths ranges from 1 MPa to 20 MPa, a deviation of the measured cohesion strengths is equal to or less than 140%, and a vertical resistance ranges from 0.005 Ω to 0.3 Ω.

19. The method according to claim 17, wherein the silicon-based active material comprises at least one selected from the group of SiOₓ(0<x<2), a silicon carbon composite, and SiOₓ(x=0).
